# EUROPÄISCHE PATENTSCHRIFT

(11) **EP 4 369 031 B1**
(45) Veröffentlichungstag und Bekanntmachung des Hinweises auf die Patenterteilung: **28.05.2025**
(21) Anmeldenummer: 23201504.0
(22) Anmeldetag: 04.10.2023
(51) Int. Cl.: G01S 7/481, G01S 17/48

(54) **OPTOELEKTRONISCHER SENSOR**
OPTOELECTRONIC SENSOR
CAPTEUR OPTOÉLECTRONIQUE

(30) Priorität: 11.11.2022 DE 102022129828
(43) Veröffentlichungstag der Anmeldung: 15.05.2024
(73) Patentinhaber: SICK AG, 79183 Waldkirch (DE)
(72) Erfinder: KÖHL, Martin, 79183 Waldkirch (DE); BERGBACH, Roland, 79367 Weisweil (DE); MATTHES, Stephan, 79183 Waldkirch (DE); WOLF, Richard, 79183 Waldkirch (DE); LANG, Felix, 79418 Schliengen (DE)
(74) Vertreter: Manitz Finsterwald Patent- und Rechtsanwaltspartnerschaft mbB

(56) Entgegenhaltungen:
- EP-B1- 1 947 477
- DE-A1- 102018 222 231
- DE-B3- 102019 200 664
- DE-B4- 19 721 688
- JP-A- 2009 264 784
- US-A1- 2020 141 722

## Beschreibung

Die vorliegende Erfindung betrifft einen optoelektronischen Sensor zum Erfassen von Objekten in einem Überwachungsbereich nach dem Triangulationsprinzip, mit einer Sendeanordnung zum Aussenden von Sendelichtsignalen in den Überwachungsbereich entlang eines Sendelichtpfads, wobei die Sendeanordnung zumindest eine Lichtquelle und eine Sendeoptik umfasst, welche zum Fokussieren der von der zumindest einen Lichtquelle erzeugten Sendelichtsignale in einen Sendelichtfleck eingerichtet ist, und mit einer Empfangsanordnung, welche eine Empfangsoptik, die zum Fokussieren von Empfangssignalen, die von einem im Überwachungsbereich anwesenden Objekt durch Remission auftreffender Sendelichtsignale erzeugt werden, in einen Empfangslichtfleck eingerichtet ist, und einen ortsauflösenden Lichtempfänger umfasst, welcher zum Detektieren des Empfangslichtflecks eingerichtet ist, wobei der Auftreffort des Empfangslichtflecks auf dem Lichtempfänger bezogen auf eine Triangulationsrichtung von dem Abstand des Objekts von dem optoelektronischen Sensor abhängt.

Bei einem derartigen optoelektronischen Sensor, der auch als Triangulationslichttaster oder allgemein als Triangulationssensor bezeichnet werden kann, sind die Lichtquelle und der Lichtempfänger einerseits und die Sendeoptik und die Empfangsoptik andererseits jeweils seitlich zueinander in der sogenannten Triangulationsrichtung versetzt, so dass die Sendeachse und die Empfangsachse nicht zusammenfallen. Eine derartige Konfiguration eines optoelektronischen Sensors wird auch als Biaxialanordnung bezeichnet.

Bei einem nach dem Triangulationsprinzip arbeitenden optoelektronischen Sensor besteht der Lichtempfänger aus wenigstens zwei fotosensitiven Empfangselementen oder ist als ein sogenannter Zeilensensor mit wenigstens einer Zeile von fotosensitiven Elementen ausgebildet.

In Abhängigkeit von der Entfernung zwischen dem Sensor und einem remittierenden Objekt ändert sich die Position eines Empfangslichtflecks, welcher von der Empfangsoptik durch Formen des remittierten, d.h. vom Objekt diffus oder spiegelnd reflektierten, Lichts auf dem Lichtempfänger erzeugt wird, in der Triangulationsrichtung. Zwischen dem Auftreffort des Empfangslichtflecks auf dem Lichtempfänger und der Entfernung des erfassten Objekts besteht ein eindeutiger geometrischer Zusammenhang. Durch Auswertung der Lichtverteilung auf dem Lichtempfänger, die z.B. von den fotosensitiven Elementen eines Zeilensensors, die entlang der Triangulationsrichtung in einer Zeile nebeneinander aufgereiht sind, erfasst werden kann, kann der Abstand zwischen dem Sensor und dem Objekt ermittelt werden oder es kann festgestellt werden, ob sich ein erfasstes Objekt in einem vorgegebenen Abstand zum optoelektronischen Sensor befindet oder nicht.

Triangulierende Sensoren werden dazu verwendet, gegebenenfalls in einem von dem Sensor erfassbaren Überwachungsbereich anwesende Objekte unter Berücksichtigung des Abstands eines Objekts von dem Sensor zu detektieren. Hierzu kann eine entsprechende Auswerteeinheit vorgesehen sein, welche zumindest mit dem Lichtempfänger verbunden ist und dazu eingerichtet ist, elektrische Empfangssignale, welche vom Lichtempfänger durch Umwandlung erfasster Empfangslichtsignale in elektrische Signale erzeugt wurden, zu verarbeiten und auf der Grundlage der elektrischen Empfangssignale ein entsprechendes Objekterfassungssignal zu erzeugen. Ein derartiges Objekterfassungssignal kann beispielsweise Informationen über den genannten Abstand des Objekts umfassen oder es kann auf der Grundlage eines Vergleichs mit einem Abstandsschwellenwert erzeugt werden. Ein solcher Vergleich kann beispielsweise eine Prüfung umfassen, ob ein ermittelter Objektabstand größer oder kleiner ist als ein vorgegebener Abstandsschwellenwert oder ob der ermittelte Objektabstand innerhalb oder außerhalb eines vorgegebenen Abstandsbereichs liegt.

Für eine zuverlässige Erfassung von Objekten ist es wünschenswert, dass die Sendelichtsignale möglichst fokussiert auf einem zu erfassenden Objekt auftreffen, d.h. dass der durch die Sendelichtsignale auf dem Objekt erzeugte Sendelichtfleck eine möglichst geringe Ausdehnung aufweist. Nur so ist eine gute Detektivität auch bei inhomogen remittierenden oder reflektierenden Objekten gewährleistet. Ein weiterer dadurch erreichbarer positiver Effekt besteht darin, dass ein von der Empfangsoptik auf dem Lichtempfänger erzeugter Empfangslichtfleck, der sozusagen ein Abbild des auf dem Objekt erzeugten Sendelichtflecks darstellt, eine ausreichende Lichtintensität bzw. Energiedichte aufweist. Der Ort, an welchem der auf dem Objekt erzeugte Sendelichtfleck eine minimale Ausdehnung aufweist, kann als Fokuspunkt des Sendelichtpfads bezeichnet werden. Befindet sich ein zu erfassendes Objekt vor oder hinter diesem Fokuspunkt, wird ein unscharfer Sendelichtfleck erzeugt, wobei sich die Ausdehnung des Sendelichtflecks mit zunehmendem Abstand des Objekts vom Fokuspunkt erhöht. Es ist daher erwünscht, dass die Sendeoptik einen möglichst großen Schärfentiefebereich aufweist, um die unschärfebedingte Vergrößerung des Sendelichtflecks innerhalb eines möglichst großen Abstandsbereichs in akzeptablen Grenzen zu halten.

Um dieses Ziel zu erreichen, kann eine Sendeoptik mit einer vergleichsweise großen Brennweite eingesetzt werden, da diese im Vergleich zu kurzbrennweitigen Optiken bei gleicher Apertur einen größeren Schärfentiefebereich aufweisen. Allerdings fordert der Einsatz von langbrennweitigen Sendeoptiken einen vergleichsweise großen Bauraum. Eine solche Bauraumvergrößerung ist wiederum unerwünscht, da bei vielen Anwendungsfällen aus Platzgründen eine möglichst kompakte Bauweise des Sensors erwünscht ist.

Aus DE 10 2007 050 096 A1 ist ein Triangulationssensor bekannt, der eine Optik zur Homogenisierung des Sendelichtstrahls aufweist. Diese Optik kann insbesondere Zylinderlinsen oder Multifokuslinsen umfassen.

DE 10 2014 105 746 A1 zeigt einen Sensor zur Erfassung von glänzenden Objekten mit einer Senderzeile und einer Empfängerzeile, die um 90° gegeneinander verdreht sind.

Aus EP 2 442 141 B1 ist ein Triangulationssensor bekannt, bei dem eine Senderzeile mit mehreren auf einem Substrat angeordneten LEDs parallel zu einem Trennsteg eines positionssensitiven Detektors anordnet sind.

In EP 2 159 599 B1 ist ein optischer Sensor in Triangulationsanordnung mit mehreren in Triangulationsrichtung nebeneinander angeordneten Lichtquellen beschrieben.

DE 197 32 376 C1 zeigt ein Verfahren und eine Vorrichtung zur Abstandsmessung nach dem Triangulationsprinzip, bei denen mehrere Laserlichtquellen als Sender vorgesehen sind, welche durch je eine eigene Linse auf unterschiedliche Messentfernungen fokussiert und die somit erzeugten mehrfachen Tastflecken auf dem positionsempfindlichen Detektor des Sensors als konzentrische Kreise unterschiedlichen Durchmessers abgebildet werden. Die Lichtquellen werden unterschiedlich moduliert, so dass sie aus der konzentrischen Überlagerung einzeln identifiziert werden können. Bei der Abstandsmessung wird jeweils der Messlichtfleck mit dem kleinsten Durchmesser ausgewertet, um Messungenauigkeiten durch die Tastfleckgröße zu minimieren. Der Detektor ist gemäß der Scheimpflugbedingung ausgerichtet.

In EP 1 947 477 B1 ist ein Triangulationssensor gezeigt, bei welchem der Empfangslichtpfad in Scheimpfluganordnung ausgeführt ist.

DE 20 2021 101 693 U1 offenbart einen Triangulationssensor mit einem ortsauflösenden Lichtempfänger und einem dem Lichtempfänger vorgeordneten Mikrolinsenraster. Zwischen dem Lichtempfänger und dem Mikrolinsenraster ist ein eine Vielzahl von Lochblenden umfassendes Blendenraster angeordnet, wobei jeder Mikrolinse eine Lochblende mit einem Lochblendendurchmesser zugeordnet ist, der kleiner ist als ein Mikrolinsendurchmesser der der Lochblende zugeordneten Mikrolinse. Die Lochblenden weisen zu den ihnen zugeordneten Mikrolinsen einen Versatz in Triangulationsrichtung auf. Der Sendelichtpfad wird zwischen der Sendelichtquelle und dem Überwachungsbereich um 90° umgelenkt.

DE 10 2019 200 664 B3 zeigt einen Triangulationssensor, bei dem eine Lichtquelle das Sendelicht zunächst in eine vom Überwachungsbereich weggewandte Richtung emittiert. Dieser Sendelichtstrahl wird dann mittels eines Umlenkspiegels in Richtung eines zu erfassenden Objekts umgelenkt.

DE 10 2018 222 231 A1 betrifft eine Vorrichtung zur optischen Vermessung einer Innenkontur einer Brillenfassung.

JP 2009 264784 A offenbart einen nach dem Triangulationsprinzip arbeitenden abstandsmessenden Sensor. Im Sendelichtpfad ist ein Umlenkelement vorgesehen, welches das Sendelicht um 90° umlenkt. Lichtquelle und Lichtempfänger sind seitlich des Überwachungsbereichs benachbart nebeneinander angeordnet.

Es ist die Aufgabe der Erfindung, einen optoelektronischen Sensor der eingangs genannten Art anzugeben, welcher kompakte Abmessungen aufweist und eine zuverlässige Objektdetektion mit hoher Empfindlichkeit ermöglicht.

Die Lösung der Aufgabe erfolgt durch einen optoelektronischen Sensor mit den Merkmalen des Anspruchs 1. Ein erfindungsgemäßer optoelektronischer Sensor zum Erfassen von Objekten in einem Überwachungsbereich nach dem Triangulationsprinzip umfasst eine Sendeanordnung zum Aussenden von Sendelichtsignalen in den Überwachungsbereich entlang eines Sendelichtpfads, wobei die Sendeanordnung zumindest eine Lichtquelle und eine Sendeoptik umfasst, welche zum Fokussieren der von der zumindest einen Lichtquelle erzeugten Sendelichtsignale in einen Sendelichtfleck eingerichtet ist, und eine Empfangsanordnung, welche eine Empfangsoptik, die zum Fokussieren von Empfangssignalen die von einem Überwachungsbereich anwesenden Objekt durch Remission auftreffender Sendelichtsignale erzeugt werden, in einen Empfangslichtfleck eingerichtet ist, und einen ortsauflösenden Lichtempfänger umfasst, welcher zum Detektieren des Empfangslichtflecks eingerichtet ist, wobei der Auftreffort des Empfangslichtflecks auf dem Lichtempfänger bezogen auf eine Triangulationsrichtung von dem Abstand des Objekts von dem optoelektronischen Sensor abhängt. Der Lichtempfänger ist dem Überwachungsbereich zugewandt und die zumindest eine Lichtquelle dem Überwachungsbereichs abgewandt angeordnet, wobei die Sendeanordnung zumindest ein Umlenkelement umfasst, welches dazu eingerichtet ist, die von der zumindest einen Lichtquelle zunächst in einer von dem Überwachungsbereich wegweisenden Richtung ausgesendeten Sendelichtsignale in Richtung des Überwachungsbereichs umzulenken.

Gemäß dem Triangulationsprinzip sind die Sendeoptik und die Empfangsoptik lateral entlang der Triangulationsrichtung voneinander beabstandet angeordnet. Die zumindest eine Lichtquelle, also eine einzige Lichtquelle oder eine Anordnung von mehreren Lichtquellen oder Teillichtquellen, ist bevorzugt als divergente Lichtquelle, insbesondere als eine Punktlichtquelle ausgebildet, bevorzugt als LED oder Oberflächenemitter (VCSEL, von englisch "vertical-cavity surface-emitting laser"). Die Sendeoptik kann ein oder mehrere reflektive, refraktive und/oder diffraktive strahlformende Elemente umfassen, beispielsweise Hohlspiegel, optische Linsen mit sphärischer, asphärischer, zylindrischer oder astigmatischer Form sowie Fresnellinsen oder diffraktive optische Elemente. Die Sendeoptik kann insbesondere auch eine Kombination von den hier beispielhaft aufgeführten oder auch anderen geeigneten strahlformenden Elementen umfassen.

Ein besonderer Vorteil der vorliegenden Erfindung besteht darin, dass der Lichtempfänger und die zumindest eine Lichtquelle in unterschiedliche Richtungen bezogen auf den Überwachungsbereich weisen. Während der dem Überwachungsbereich zugewandt angeordnete Lichtempfänger, d.h. dessen lichtempfindliche Seite, unmittelbar in den Überwachungsbereich "schaut", strahlt die zumindest eine, dem Überwachungsbereich abgewandt angeordnete Lichtquelle, d.h. deren lichtemittierende Seite, zunächst in die entgegengesetzte oder im Wesentlichen entgegengesetzte Richtung. Diese zunächst ungünstig erscheinende Ausgestaltung ermöglicht es in Zusammenwirken mit dem zumindest einen Umlenkelement jedoch, durch die dadurch erzielte Faltung des gesamten Sendelichtpfades den vorhandenen Bauraum, der in der Regel durch eine angestrebte möglichst kompakte Gehäuseform des optoelektronischen Sensors begrenzt ist, in optimaler Weise zu nutzen.

Die Faltung des Sendelichtpfads erfolgt hier bevorzugt mit einem Winkel von annähernd 180°. Im Vergleich zu anderen denkbaren Umlenkungen, z.B. einer aus dem Stand der Technik bereits bekannten Umlenkung des Sendelichtpfads um 90°, erfolgt eine bessere Raumnutzung. Insbesondere kann damit auch die laterale Ausdehnung des Sensors, d.h. eine Ausdehnung quer zum Sende- bzw. Empfangslichtpfad, minimiert werden.

Diese optimierte Bauraumausnutzung gestattet es insbesondere, die Brennweite der Sendeoptik gegenüber einer vergleichbaren faltungsfreien Sendeanordnung erheblich zu verlängern. Hierdurch wird, wie eingangs erläutert, der Schärfentiefebereich im Vergleich zu einer kurzbrennweitigen Sendeoptik mit vergleichbarer Apertur vergrößert. Dies wirkt sich positiv auf die Sensitivität und Genauigkeit der Objekterfassung aus.

Erfindungsgemäß sind die zumindest eine Lichtquelle und der Lichtempfänger auf einer gemeinsamen, plan ausgestalteten Trägerkarte angeordnet, wobei die Trägerkarte eine dem Überwachungsbereich zugewandte, eine Vorderseite der Trägerkarte bildende, erste Seite und eine dem Überwachungsbereich abgewandte, eine Rückseite der Trägerkarte bildende, zweite Seite aufweist, und wobei der Lichtempfänger auf der ersten Seite und die zumindest eine Lichtquelle auf der zweiten Seite angeordnet sind. Die Trägerkarte bildet ein Trägermodul sowohl für den Lichtempfänger als auch für die zumindest eine Lichtquelle und ist plan ausgestaltet. Bei der Trägerkarte kann es sich insbesondere um eine Leiterkarte, Leiterplatte oder Elektronickarte handeln. Da derartige Trägerkarten einen nicht unerheblichen Kostenfaktor ausmachen, kann durch die kombinierte Verwendung einer gemeinsamen Trägerkarte sowohl für den Lichtempfänger als auch die zumindest eine Lichtquelle eine deutliche Kostenreduktion erzielt werden.

Gemäß einer weiteren bevorzugten Ausführungsform ist das zumindest eine Umlenkelement im Sendelichtpfad zwischen der zumindest einen Lichtquelle und der Sendeoptik angeordnet. Grundsätzlich ist es nicht erforderlich, dass die Sendeoptik und das Umlenkelement als zwei vollständig getrennte Bauteile ausgeführt sind. So kann beispielsweise das Umlenkelement, oder sofern mehrere Umlenkelemente vorhanden sind, ein Teil der Umlenkelemente einen Bestandteil der Sendeoptik bilden. So kann beispielsweise das Umlenkelement zusätzlich strahlformende, insbesondere fokussierende Eigenschaften aufweisen, die mit einem weiteren Bestandteil der Sendeoptik, beispielsweise einer Linse, zusammenwirken. Dies wird nachfolgend im Zusammenhang mit einer weiteren bevorzugten Ausführungsform näher erläutert.

Gemäß einer weiteren bevorzugten Ausführungsform ist vorgesehen, dass die Empfangsoptik eine Optikebene aufweist, dass ein, in Ausbreitungsrichtung der Sendelichtsignale betrachtet, hinter dem oder den Umlenkelementen verlaufender Teilabschnitt des Sendelichtpfads in einer Sendeebene verläuft, und dass eine Lichteintrittsfläche des Lichtempfängers in einer Empfangsebene verläuft, wobei sich die Sendeebene, die Optikebene und die Empfangsebene in einer gemeinsamen Schnittgeraden schneiden. Die genannte Optikebene kann auch als Haupterstreckungsebene oder Hauptebene der Empfangsoptik bezeichnet werden. Gemäß dieser Ausgestaltung sind der Lichtempfänger, die Empfangsoptik und der Sendelichtpfad so angeordnet, dass die Bedingungen der Scheimpflugschen Regel erfüllt sind. Bei dieser Konfiguration liegt - anders formuliert - die Sendeachse bzw. die optische Achse des hinter dem oder den Umlenkelementen verlaufenden Teilabschnitts des Sendelichtpfads in der Sendebene. Somit befinden sich die in Abhängigkeit vom Objektabstand möglichen Orte, an denen ein Empfangslichtfleck auf einem Objekt erzeugt werden kann, in der Sendeebene, die somit auch als optische Objektebene des Empfangslichtpfads bezeichnet werden kann. Demgemäß wird aufgrund der Erfüllung der Scheimpflug-Regel ein jeweiliger Sendelichtfleck unabhängig von seinem Abstand zum optoelektronischen Sensor scharf in die Empfangsebene und damit auf dem Lichtempfänger abgebildet, wobei die Empfangsebene auch als optische Bildebene des Empfangslichtpfads bezeichnet werden kann.

Mit einer derartigen Scheimpflug-Anordnung kann ein sehr großer Arbeitsabstandsbereich, also ein Bereich zwischen einem minimalen und einem maximalen Abstand eines erfassbaren Objekts von dem Sensor, abgedeckt werden, ohne dass der von der Empfangsoptik geformte Empfangslichtfleck abstandsbedingt unscharf und dementsprechend mit vergrößerter Ausdehnung auf dem Lichtempfänger abgebildet wird, was die Detektionsgenauigkeit verschlechtern würde.

Die Bedingung "Schneiden" in dem Merkmal, wonach sich die Sendeebene, die Optikebene und die Empfangsebene in einer gemeinsamen Schnittgeraden schneiden, ist hier nicht in einem engen mathematischen Sinn zu verstehen, sondern als näherungsweise, also insbesondere im Rahmen von üblichen konstruktiv oder fertigungstechnisch bedingten Toleranzen zu interpretieren.

Gemäß einer weiteren bevorzugten Ausführungsform ist vorgesehen, dass ein, in Ausbreitungsrichtung der Sendelichtsignale betrachtet, hinter dem oder den Umlenkelementen verlaufender Teilabschnitt des Sendelichtpfads in einer Sendeebene verläuft, und dass eine Lichteintrittsfläche des Lichtempfängers in einer Empfangsebene verläuft, wobei der zwischen der Sendeebene und der Empfangsebene eingeschlossene Winkel mehr als 90° beträgt. Unter dem eingeschlossenen Winkel wird derjenige Winkel verstanden, der kleiner als 180° ist. Bevorzugt beträgt der eingeschlossene Winkel mehr als 100°, besonders bevorzugt mehr als 115° und insbesondere mehr als 120°. Eine derartige Ausgestaltung hat sich insbesondere in Kombination mit der Erfüllung der vorstehend beschriebenen Anordnung der Optikebene, der Sendeebene und der Empfangsebene in Scheimpflug-Anordnung bewährt. Die Neigung der Empfangsebene gegenüber der Sendeebene um mehr als 90° ermöglicht es insbesondere, die Empfangsoptik so anzuordnen, dass deren Optikebene oder Hauptebene rechtwinklig zur Sendeebene und insbesondere auch parallel zur Optikebene der Sendeoptik verläuft. Mit anderen Worten können die Optikebenen der Sendeoptik und der Empfangsoptik in einer gemeinsamen Ebene oder zumindest parallel zueinander verlaufen, bevorzugt parallel zu einer Gehäusefläche eines den optoelektronischen Sensor umgebenden Gehäuses oder einer tragenden Struktur im Inneren des Sensors. Eine derartige Konfiguration bietet konstruktive und fertigungstechnische Vorteile gegenüber einer möglichen alternativen Ausführungsform mit einer senkrecht zur Sendeebene verlaufenden Empfangsebene, bei der zur Erfüllung der Scheimpflug-Bedingung die Optikebene der Empfangsoptik geneigt verlaufen müsste. Ein weiterer Vorteil der geneigten Anordnung der Sendebene bzw. der Trägerkarte ergibt sich auch im Zusammenhang mit einer nachfolgend beschriebenen weiteren bevorzugten Ausführungsform.

Gemäß einer weiteren bevorzugten Ausführungsform verläuft bei einer Ausgestaltung mit gemeinsamer Trägerkarte für Lichtquelle und Lichtempfänger eine Lichteintrittsfläche des Lichtempfängers parallel zu der ersten Seite der Trägerkarte. Dementsprechend kann die Trägerkarte bzw. die erste Seite der Trägerkarte parallel zu der Empfangsebene ausgerichtet sein. Es ergibt sich der Vorteil, dass der Lichtempfänger, bezogen auf die Haupterstreckungsebene der Trägerkarte, insbesondere auch dann nicht gekippt montiert werden muss, wenn gemäß der vorstehenden beschriebenen Ausführungsformen eine Scheimpflug-Anordnung einschließlich einer vertikalen Ausrichtung der Optikeben der Empfangsoptik zur Sendeebene realisiert werden soll.

Gemäß einer weiteren bevorzugten Ausführungsform verläuft bei einer Ausgestaltung mit gemeinsamer Trägerkarte für Lichtquelle und Lichtempfänger eine Hauptabstrahlrichtung der zumindest einen Lichtquelle senkrecht zu der zweiten Seite der Trägerkarte. Unter der Hauptabstrahlrichtung der zumindest einen Lichtquelle wird insbesondere diejenige Abstrahlrichtung verstanden, welche die größte Energiedichte pro Winkeleinheit aufweist. In der Regel stellt diese Hauptabstrahlrichtung bei einer divergent abstrahlenden Lichtquelle die Symmetrieachse des Abstrahlbereichs dar. Hierdurch ergibt sich der Vorteil, dass die Lichtquelle, bezogen auf die Haupterstreckungsebene der Trägerkarte, nicht gekippt oder geneigt montiert werden muss. Die Hauptabstrahlrichtung verläuft bevorzugt auch senkrecht zur Empfangsebene. Im Zusammenhang mit der bereits vorstehend beschriebenen Ausführungsform, wonach der zwischen der Sendeebene und der Empfangsebene eingeschlossene Winkel mehr als 90° beträgt, ergibt sich der weitere Vorteil, dass derjenige Teilabschnitt des Sendelichtpfads, der - in der Ausbreitungsrichtung des Sendelichts betrachtet - unmittelbar hinter der Lichtquelle und vor dem Umlenkelement liegt, geneigt zu der Sendeebene verläuft. Hierdurch wird es möglich, nur ein einziges Umlenkelement einzusetzen. Würde die Empfangsebene und damit die zu dieser parallel ausgerichtete Trägerkarte mit der Sendeebene einen Winkel von genau 90° einschließen und zugleich die vom Überwachungsbereich wegweisende Hauptabstrahlrichtung der Lichtquelle senkrecht zur Trägerkarte verlaufen, wären wenigstens zwei Umlenkelemente erforderlich, um den Sendelichtpfad sozusagen um die Trägerkarte herum in Richtung des Überwachungsbereichs zu lenken, was den Materialaufwand und auch den Montageaufwand erhöhen und dadurch auch eine zusätzliche Fehlerquelle bei der Justierung schaffen würde.

Gemäß einer weiteren bevorzugten Ausführungsform umfasst die Sendeanordnung mehrere Lichtquellen, welche entlang einer senkrecht zur Triangulationsrichtung verlaufenden Geraden angeordnet sind, oder die Sendeanordnung umfasst eine einzelne längsausgedehnte Lichtquelle, deren Haupterstreckungsrichtung senkrecht zur Triangulationsrichtung verläuft. Die mehreren Lichtquellen können bevorzugt auf einem gemeinsamen Halbleitersubstrat oder Chip angeordnet sein, beispielsweise in Form von LED-Strukturen oder Multi-VCSEL-Strukturen. Mit dieser Ausgestaltung kann ein linienförmiger Sendelichtfleck erzeugt werden, wodurch die im Sendelichtfleck enthaltene Lichtintensität erhöht werden kann. Eine alternative Lösung zur Erhöhung der Energiedichte würde darin bestehen, eine Lichtquelle mit größerer Lichtleistung einzusetzen. Insbesondere beim Einsatz von LEDs würde sich hierbei jedoch zugleich die Lichtaustrittsfläche vergrößern, wodurch sich bei der üblichen Abbildung der Lichtquelle in den Sendelichtfleck auch die Ausdehnung des Sendelichtflecks in Triangulationsrichtung zwangsläufig in unerwünschtem Ausmaß erhöhen würde. Durch die vorteilhafte Erzeugung eines linienförmigen Sendelichtflecks wird ausgenutzt, dass typische Lichtempfänger, beispielsweise Zeilenempfänger, auch eine gewisse Ausdehnung quer zur Triangulationsrichtung aufweisen. Bevorzugt wird die Längsausdehnung der Anordnung von mehreren Lichtquellen bzw. der einzelnen längsausgedehnten Lichtquelle so gewählt, dass unter Berücksichtigung der Brennweiten der Optiken und sonstigen geometrischen Parameter der korrespondierende, durch Abbildung des Sendelichtflecks auf dem Lichtempfänger erzeugte Empfangslichtfleck eine Längsausdehnung entsprechend der Breite des Lichtempfängers quer zur Triangulationsrichtung aufweist.

In dem Zusammenhang hat es sich als vorteilhaft erwiesen, wenn die Sendeoptik als eine astigmatische Optik ausgebildet ist, welche derart ausgestaltet und angeordnet ist, dass die mehreren Lichtquellen in einem vorgegebenen Arbeitsabstand bezogen auf die Triangulationsrichtung scharf und in einer Querrichtung dazu unscharf abgebildet werden. Eine derartige astigmatische Optik weist unterschiedliche Brennweiten in der Meridional- und Sagittalebene auf und besitzt folglich die Eigenschaft, dass eine punktförmige Lichtquelle in zwei in Lichtausbreitungsrichtung hintereinanderliegende, senkrecht zueinander verlaufende Brennlinien abgebildet wird. Der genannte vorgegebene Arbeitsabstand kann durch eine Fokusweite oder Bildweite beschrieben werden, in welcher der Sendelichtfleck seine größtmögliche Schärfe in Triangulationsrichtung aufweisen soll. Ein Arbeitsabstandsbereich des Sensors erstreckt sich in der Regel vor und hinter diesem vorgegebenen Arbeitsabstand. Die mehreren punktförmigen Lichtquellen werden nun derart fokussiert, dass die ihnen zugeordneten vorderen Brennlinien quer zur Triangulationsrichtung verlaufen und sich in ihrer Längsrichtung miteinander überlappen, wodurch der im vorgegebenen Arbeitsabstand liegende Sendelichtfleck gebildet wird. Die hinteren Brennlinien, die parallel zur Triangulationsrichtung verlaufen, liegen vorteilhafterweise außerhalb des Arbeitsbereichs. Somit wird der Sendelichtfleck in seiner quer zur Triangulationsrichtung verlaufenden Längsausdehnung homogenisiert. Die astigmatische Ausprägung der Sendeoptik dient hier also nicht dazu, überhaupt erst einen linienförmigen Sendelichtfleck zu erzeugen, was vorliegend ja bereits schon durch die mehreren Lichtquellen erfolgt, sondern dient der Verbesserung der Qualität des Sendelichtflecks, indem das Auftreten von einzelnen Intensitätspeaks entsprechend der Anzahl der Einzellichtquellen vermieden wird.

Die gewünschte astigmatische Ausprägung der Sendeoptik kann in vielfältiger Weise erreicht werden. So kann beispielsweise eine entsprechende astigmatische Einzellinse oder Linsenanordnung verwendet werden, die auch als Fokal- oder Multifokallinse bezeichnet werden kann. Grundsätzlich kann auch eine Kombination aus einer rotationssymmetrischen sphärischen Linse und einer Zylinderlinse verwendet werden. Eine weitere beispielhafte Umsetzung kann dadurch erfolgen, dass das Umlenkelement zusätzlich auch strahlformende bzw. fokussierende Eigenschaften erhält. Beispielsweise kann das Umlenkelement als Hohlspiegel mit einer zylindrischen Form ausgestaltet sein und die Sendeoptik eine sphärische Linse umfassen. Auch der umgekehrte Fall mit einer Ausgestaltung des Umlenkelements als sphärischer Hohlspiegel und der Verwendung einer Zylinderlinse in der Sendeoptik wäre denkbar. Wie bereits vorstehend erwähnt wurde, kann die astigmatische Ausprägung der Sendeoptik alternativ oder zusätzlich auch durch die Verwendung von diffraktiven Elementen wie Fresnellinsen umgesetzt werden.

Bevorzugt kann die Apertur des Sendelichtpfads, insbesondere die Apertur der Sendeoptik, eine Asymmetrie aufweisen, wobei die Ausdehnung der Apertur in Triangulationsrichtung von der Ausdehnung senkrecht zur Triangulationsrichtung abweicht. Bevorzugt ist die Ausdehnung in Triangulationsrichtung kleiner als die Ausdehnung senkrecht zur Triangulationsrichtung. Eine auf diese Weise erzielbare asymmetrische Vergrößerung der Apertur lediglich in der Querrichtung zur Triangulationsrichtung kann eine Reduzierung der Lichteffizienz, die durch eine Verkleinerung des Öffnungswinkels bei der Wahl einer vergleichsweise langbrennweitigen Sendeoptik bedingt ist, zumindest teilweise kompensieren, ohne dass zugleich der Schärfentiefebereich in der Triangulationsrichtung verkleinert wird. Die Apertur kann beispielsweise eine elliptische Form mit unterschiedlich langen Hauptachsen oder eine rechteckige Form mit unterschiedlichen Kantenlängen, insbesondere eine Schlitzform, aufweisen.

Gemäß einer weiteren bevorzugten Ausführungsform weist die Empfangsoptik eine asymmetrische Apertur auf, welche bezogen auf die Hauptachse der Empfangsoptik auf der dem Sendelichtpfad zugewandten Seite der Hauptachse kleiner ist als auf der dem Sendelichtpfad abgewandten Seite der Hauptachse. Unter dem Begriff "Hauptachse" wird insbesondere die optische Achse der Empfangsoptik, d.h. einer Empfangslinse oder einer Empfangslinsenanordnung, verstanden. Es handelt sich hierbei um die durch den optischen Linsenmittelpunkt senkrecht zur Optikebene verlaufende Achse. Mit anderen Worten ist bei dieser Ausgestaltung einer die Apertur begrenzenden Randfläche zum Linsenmittelpunkt auf der dem Sendelichtpfad zugewandten Seite kleiner als auf der dem Sendelichtpfad abgewandten Seite. Somit weist die Apertur der Empfangsoptik in der Triangulationsrichtung eine Asymmetrie auf.

Insbesondere im Zusammenwirken mit einem um mehr als 90° gegenüber der Sendeebene geneigten Empfangsebene wird durch eine asymmetrische Apertur der Empfangsoptik, welche bezogen auf die Hauptachse der Empfangsoptik auf der dem Sendelichtpfad zugewandten Seite der Hauptachse kleiner ist als auf der dem Sendelichtpfad abgewandten Seite der Hauptachse vermieden, dass bestimmte Empfangslichtstrahlen unter einem sehr flachen Winkel auf den Lichtempfänger treffen. Derartige flach auftreffende Lichtstrahlen können unerwünschte Effekte durch Übersprechen auf benachbarte lichtempfindliche Elemente des Lichtsensors verursachen, was die Signalqualität bei der elektronischen Erfassung des Empfangslichtflecks beeinträchtigen kann. Im Vergleich zu einem Lichtempfänger, dessen Empfangsebene parallel zur Optikebene der Empfangsoptik verläuft und bei denen bei einer kreisförmigen Apertur alle Randlichtstrahlen unter dem gleichen Auftreffwinkel auf den Lichtempfänger treffen, fallen nämlich bei einem gegenüber der Optikebene geneigt angeordneten Lichtempfänger diejenigen Lichtstrahlen, die bezogen auf die Hauptachse der Empfangsoptik mit einem bestimmten Abstand auf der dem Sendelichtpfad zugewandten Seite der Hauptachse gebrochen werden unter einem flacheren Winkel auf den Lichtempfänger, als diejenigen Lichtstrahlen, die im gleichen Abstand, jedoch auf der gegenüberliegenden, dem Sendelichtpfad abgewandten Seite der Hauptachse gebrochen werden.

Durch die asymmetrische Verringerung der Apertur der Empfangsoptik auf der dem Sendelichtpfad zugewandten Seite der Hauptachse werden die in besonders flachem Winkel auftreffenden Lichtstrahlen sozusagen abgeschnitten. Die damit verbundene Reduzierung der Aperturfläche der Empfangsoptik gegenüber einer korrespondierenden unbeschnittenen kreisförmigen Aperturfläche kann dabei hingenommen werden. Das Maß der Asymmetrie der beiden Aperturhälften kann dabei an den Neigungswinkel der Empfangsebene, d.h. dem zwischen der Sendeebene und der Empfangsebene eingeschlossenen Winkel, und andere Parameter angepasst werden. In der Regel erfordert eine größere Neigung der Empfangsebene gegenüber der Hauptebene der Empfangsoptik auch eine größere Asymmetrie, wobei auch die spezifische Störempfindlichkeit des Lichtempfängers für unerwünscht flach einfallende Strahlen berücksichtigt werden sollte.

In dem Zusammenhang hat es sich als vorteilhaft erwiesen, wenn die asymmetrische Apertur der Empfangsoptik dadurch gebildet ist, dass die Ausdehnung der optisch wirksamen Fläche der Empfangsoptik bezogen auf die Hauptachse der Empfangsoptik auf der dem Sendelicht zugewandten Seite der Hauptachse kleiner ist als auf der dem Sendelichtpfad abgewandten Seite der Hauptachse. Dementsprechend wird die Asymmetrie dadurch erreicht, dass anschaulich gesagt von einer symmetrisch ausgeprägten Optik oder Linse auf der dem Sendelichtpfad zugewandten Seite ein Teil "abgeschnitten" wird, wobei der Begriff "abgeschnitten" nicht wörtlich zu verstehen ist, sondern auch bereits bei der Herstellung der Linse, beispielsweise im Spritzgussverfahren berücksichtigt werden kann.

Die Reduzierung der optisch wirksamen Fläche der Empfangsoptik schließt nicht aus, dass die Optik oder Linse sich auch über den durch die Apertur begrenzten Bereich ausdehnen kann, beispielsweise um bei einer Kunststofflinse eine Art Rahmen zur Fassung der Linse oder Optik in einer entsprechenden Halterung zu schaffen. Ein solcher überstehender Bereich trägt jedoch nicht zur Erzeugung des Empfangslichtflecks bei und wird daher als optisch nicht wirksam bezeichnet.

Alternativ kann die asymmetrische Apertur dadurch gebildet sein, dass der bevorzugt rotationssymmetrisch ausgebildeten Empfangsoptik eine Aperturblende zugeordnet ist, deren Öffnung bezogen auf die Hauptachse der Empfangsoptik auf der dem Empfangslichtpfad zugewandten Seite der Hauptachse kleiner ist als auf der dem Sendelichtpfad abgewandten Seite der Hauptachse. Bei dieser Ausgestaltung kann die asymmetrische Begrenzung der Apertur auf kostengünstige Weise durch eine vor oder auch hinter der Empfangsoptik angeordnete asymmetrische Aperturblende erreicht werden. Hierdurch erübrigen sich kostenintensive Sonderanfertigungen der Empfangsoptik.

Zusätzlich kann auch eine Asymmetrie der Empfangsoptik senkrecht zur Triangulationsrichtung vorgesehen sein.

Weitere Vorteile des erfindungsgemäßen optoelektronischen Sensors und vorteilhafte Ausgestaltungen ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen. Es zeigen:
- Fig. 1: eine schematische Querschnittsdarstellung eines optoelektronischen Sensors gemäß einem ersten Ausführungsbeispiel in einer ersten Schnittebene; und

- Fig. 2: eine schematische Querschnittsdarstellung eines Sendelichtpfads des optoelektronischen Sensors von Fig. 1 in einer zweiten Schnittebene.

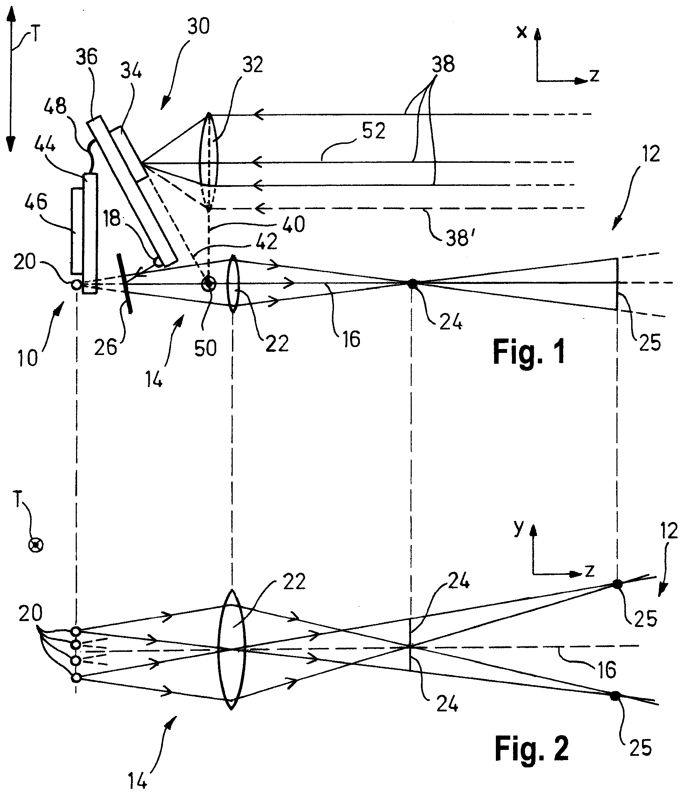

Fig. 1 zeigt einen optoelektronischen Sensor 10 gemäß einem Ausführungsbeispiel, welcher zum Erfassen von Objekten in einem Überwachungsbereich 12 nach dem Triangulationsprinzip eingerichtet ist.

Der optoelektronische Sensor umfasst eine Sendeanordnung 14 zum Aussenden von Sendelichtsignalen in den Überwachungsbereich entlang eines Sendelichtpfads 16, welcher in Fig. 1 und 2 vereinfacht als eine Sendelichtachse dargestellt ist. Die Sendelichtanordnung 14 umfasst im vorliegenden Ausführungsbeispiel vier zum Beispiel als LED oder VCSEL ausgebildete Lichtquellen 18, welche entlang einer senkrecht zu einer Triangulationsrichtung T verlaufenden Geraden angeordnet sind. Da diese Gerade in Fig. 1 senkrecht zur Zeichenebene verläuft, erscheinen die vier Lichtquellen 18 in der schematischen Schnittdarstellung von Fig. 1 als übereinanderliegende Lichtquellen, so dass in Fig. 1 nur eine Lichtquelle 18 sichtbar ist. Bei einer nicht dargestellten Abwandlung ist jedoch eine Verwendung von nur einer Lichtquelle 18 ebenfalls möglich, zum Beispiel, wenn sie linienförmig ausgestaltet ist und sich senkrecht zur Zeichenebene der Fig. 1 erstreckt.

Der optoelektronische Sensor 10 umfasst weiterhin eine Empfangsanordnung 30, mit einer Empfangsoptik 32, die zum Fokussieren von Empfangslichtsignalen bzw. Empfangslichtstrahlen 38 in einen Empfangslichtfleck eingerichtet ist. Die Empfangslichtsignale bzw. Empfangslichtstrahlen 38 werden von einem im Überwachungsbereich 12 anwesenden Objekt (nicht dargestellt) durch Remission, d.h. durch spiegelnde und/oder diffuse Reflektion, auftreffender Sendelichtsignale erzeugt. Die Empfangsanordnung 30 umfasst ferner einen ortsauflösenden Lichtempfänger 34, welcher zum ortsaufgelösten Detektieren des Empfangslichtflecks eingerichtet ist. Der Lichtempfänger 34 kann beispielsweise als Zeilensensor mit mehreren benachbart zueinander angeordneten fotosensitiven Elementen ausgebildet sein, die parallel zur Zeichenebene nebeneinander angeordnet sind.

Die Sendeanordnung 14 und die Empfangsanordnung 30 sind in der Triangulationsrichtung T voneinander beabstandet angeordnet, so dass gemäß dem Triangulationsprinzip der Auftreffort des Empfangslichtflecks auf den Lichtempfänger 34 bezogen auf die Triangulationsrichtung von dem Abstand eines erfassten Objekts von dem optoelektronischen Sensor 10 abhängt.

Der optoelektronische Sensor 10 umfasst eine plane Trägerkarte 36, welche allgemein als Trägermodul, bevorzugt aber als Elektronikkarte oder Leiterkarte ausgebildet ist und sowohl die Lichtquellen 18 als auch den Lichtempfänger 34 trägt, wobei zusätzlich noch weitere, nicht dargestellte elektronische Bauelemente auf der Trägerkarte 36 angeordnet sein können. Die Trägerkarte 36 kann mit einer Anzeige- und Bedieneinheit 46 verbunden sein, welche an einem Strukturelement 44, beispielsweise einem Abschnitt eines Gehäuses des optoelektronischen Sensors 10, angeordnet ist. Die Verbindung kann beispielsweise über eine flexible Leitung 48 erfolgen.

Die Trägerkarte 36 weist eine dem Überwachungsbereich 12 zugewandte erste Seite und eine dem Überwachungsbereich 12 abgewandte zweite Seite auf, wobei der Lichtempfänger 34 auf der ersten Seite und die Lichtquellen 18 auf der zweiten Seite angeordnet sind. Somit wird das von den Lichtquellen 18 emittierte Sendelicht zunächst in eine von dem Überwachungsbereich 12 wegführende Richtung emittiert. Um das Sendelicht in Richtung des Überwachungsbereichs 12 umzulenken, weist die Sendeanordnung 14 ein Umlenkelement 26 auf, welches im vorliegenden Ausführungsbeispiel als Spiegel ausgestaltet ist. Das Sendelicht wird also nach dem Austreten aus den Lichtquellen 18 zunächst umgelenkt und nachfolgend mittels einer Sendeoptik 22 in einen Sendelichtfleck fokussiert.

Durch diese Faltung des Sendelichtpfads 16 wird bei einem vorgegebenen Bauraum (z.B. bei einer vorgegebenen Gehäusetiefe eines Gehäuses des optoelektronischen Sensors 10) die maximal mögliche Objektweite, d.h. der maximal mögliche Abstand zwischen den Lichtquellen 18 und der Sendeoptik 22 im Vergleich zu einem ungefalteten Strahlengang, vergrößert. Um dies zu veranschaulichen, sind in Fig. 1 und 2 zusätzlich zu den Lichtquellen 18 entsprechende virtuelle Lichtquellen 20 eingezeichnet, deren Position sich für einen ungefalteten Sendelichtstrahlengang mit gleicher Objektweite ergeben würde. Wie in Fig. 1 gut zu erkennen ist, liegt diese Position auf einer dem Überwachungsbereich 12 abgewandten Seite des Strukturelements 44 und damit bereits außerhalb eines Gehäuses des optoelektronischen Sensors 10. Um unter Verzicht auf Umlenkelemente eine oder mehrere Lichtquellen an einer Position entsprechend der Position der virtuellen Lichtquellen 20 anordnen zu können, müsste die Bautiefe des Gehäuses somit deutlich vergrößert werden.

Während in Fig. 1 der optoelektronische Sensor 10 in einer X-Z-Ebene dargestellt ist, zeigt Fig. 2 die Sendeanordnung 14 mit dem zugehörigen Sendelichtpfad 16 in einer hierzu senkrechten Y-Z-Ebene. Dementsprechend sind die virtuellen Lichtquellen 20 nicht mehr übereinanderliegend, sondern nebeneinanderliegend dargestellt. Wegen der besseren Übersichtlichkeit sind die zugehörigen reellen Lichtquellen 18 sowie das Umlenkelement 26 nicht gezeigt. Ebenso sind aus diesem Grund die Strahlen auch lediglich für die beiden äußeren virtuellen Lichtquellen 20 dargestellt und für die beiden inneren virtuellen Lichtquellen 20 nur durch kurze gestrichelte Linien angedeutet. Beide Darstellungen der Fig. 1 und 2 sind grundsätzlich nicht maßstäblich und dienen lediglich der Veranschaulichung der beschriebenen Effekte.

Wie aus einem Vergleich von Fig. 1 und Fig. 2 ersichtlich wird, ist die Sendeoptik 22 als eine astigmatische Optik ausgebildet, welche derart ausgestaltet und angeordnet ist, dass die mehreren Lichtquellen 18 scharf in einem vorgegebenen Arbeitsabstand bezogen auf die Triangulationsrichtung Z und unscharf in einer Querrichtung dazu abgebildet werden. Im Unterschied zu Fig. 1 ist in Fig. 2 die Sendeoptik 22 leicht vergrößert dargestellt, um den Effekt durch die astigmatische Ausgestaltung der Empfangsoptik 22 zeichnerisch besser veranschaulichen zu können. Die punktförmigen Lichtquellen 18 bzw. die zugeordneten virtuellen Lichtquellen 20 werden in zwei jeweilige hintereinanderliegende, senkrecht zueinander verlaufende Brennlinien 24, 25 abgebildet.

Die vorderen, sich in Längsrichtung teilweise überlappenden Brennlinien 24 erzeugen auf einem dort anwesenden Objekt einen linienförmigen Sendelichtfleck, dessen Querschnitt in Triangulationsrichtung T bezogen auf den Objektabstand ein Minimum aufweist (Fig. 1). Die vorderen Brennlinien 24 definieren einen Sollabstand oder vorgegebenen Arbeitsabstand, der auch als Arbeitspunkt bezeichnet wird. Ein Arbeitsabstandsbereich des Sensors 10 erstreckt sich vor und hinter diesem Arbeitspunkt, wobei sich die Größe eines sinnvollen Arbeitsabstandsbereichs aus einer gerade noch tolerierbaren Unschärfe des Sendelichtflecks festlegen lässt. Die vorderen Brennlinien 24 weisen aufgrund der astigmatischen Ausgestaltung der Empfangsoptik 22 in einer senkrecht zur Triangulationsrichtung T verlaufenden Richtung eine unschärfebedingte Ausdehnung auf (Fig. 2). Diese Unschärfe bewirkt im Vergleich zu einer nicht astigmatischen Abbildung eine Homogenisierung des linienförmigen Empfangslichtflecks.

Die jeweiligen hinteren Brennlinien 25, die in Fig. 1 übereinanderliegen und daher nur als eine Linie dargestellt und in Fig. 2 als jeweilige Schnittpunkte mit der Zeichenebene dargestellt sind, liegen sinnvollerweise außerhalb des Arbeitsabstandsbereichs des Sensors 10.

Der Abstand des durch die Brennlinien 24 definierten Arbeitspunkts von der Sendeoptik 22, welcher der vorderen Bildweite der Sendeoptik 22 entspricht, hängt von der optischen Weglänge zwischen den Lichtquellen 18 und der Sendeoptik 22, d.h. der Objektweite, und der Brennweite der Sendeoptik 22 ab.

Da die Faltung des Sendelichtpfads 16 die Verwendung einer langbrennweitigen Sendeoptik 22 ermöglicht, ist der nutzbare Arbeitsabstandsbereich jedoch größer als bei einer kurzbrennweitigen Sendeoptik mit vergleichbarer Apertur. Die durch die Vergrößerung der Brennweite bedingte Reduzierung der Lichtstärke der Sendeoptik 22 wird durch die Verwendung der längsausgedehnten Anordnung von mehreren Lichtquellen 18 kompensiert.

In der schematischen Darstellung von Fig. 1 ist aus Gründen der Übersichtlichkeit die Bildweite des Sendelichtflecks 24 stark verkürzt wiedergegeben und korrespondiert nicht mit dem Verlauf der Empfangslichtstrahlen 38, welche in Fig. 1 für ein sich annähernd in unendlicher Entfernung vom optoelektronischen Sensor 10 befindenden Objekt wiedergegeben sind.

Gemäß Fig. 1 definiert der hinter dem Umlenkelement liegende Teilabschnitt des Sendelichtpfads 16 zugleich eine Sendeebene 16, welche einer senkrecht zur Zeichenebene verlaufenden Ebene entspricht. Die Empfangsoptik 32 weist eine Optikebene 40 auf, welche einer Haupterstreckungsebene oder Hauptebene der Empfangsoptik 32 entspricht. Der Lichtempfänger 34 weist eine Lichteintrittsfläche auf, welche in einer Empfangsebene 42 verläuft. Die Optikebene 40 und die Empfangsebene 40 verlaufen ebenfalls senkrecht zur Zeichenebene und schneiden die Sendeebene 16 in einer gemeinsamen Schnittachse 50, die ebenfalls senkrecht zur Zeichenebene verläuft und daher als Punkt dargestellt ist. Die Empfangsebene 16, die Optikebene 40 und die Empfangsebene 42 erfüllen somit die Scheimpflugsche Bedingung. Daher wird ein Sendelichtfleck, welcher durch die Sendelichtstrahlen beim Auftreffen auf ein Objekt erzeugt werden, unabhängig vom Abstand des Objekts vom optoelektronischen Sensor 10 oder der Bildweite stets scharf auf den Lichtempfänger 34 abgebildet.

Um diese Scheimpfluganordnung zu realisieren, verläuft im Ausführungsbeispiel die Optikebene 40 senkrecht zur Sendeebene 16, während die Empfangsebene 42 gegenüber der Optikebene 40 um einen Winkel von ca. 25° geneigt ist. Folglich beträgt der zwischen der Sendeebene 16 und der Empfangsebene 42 eingeschlossene Winkel im Ausführungsbeispiel ungefähr 115°. Die genannten Winkelangaben sind hier rein beispielhaft. Der Neigungswinkel bzw. der eingeschlossene Winkel können auch größer oder kleiner gewählt werden. Beispielsweise kann der Neigungswinkel auch nur 15 bis 20° betragen, was einem zwischen der Sendeebene 16 und der Empfangsebene 42 eingeschlossenen Winkel von 105 bis 110° entsprechen würde.

Da die Lichtquellen 18 das Sendelicht senkrecht zur rückseitigen Oberfläche der Trägerkarte 36 abstrahlen, ermöglicht die geneigte Anordnung der Trägerkarte 36, dass das in Bezug auf den hinter dem Umlenkelement liegenden Teilabschnitt des Sendelichtpfads 16 geneigt abgestrahlte Sendelicht in einfacher Weise mittels des einen Umlenkelements 26 um die Trägerkarte herum in Richtung der Sendeoptik 22 gelenkt werden kann. Somit ist es nicht erforderlich, mehrere Umlenkelemente 26 vorzusehen, was jedoch bei anderer geometrischer Anordnung der Komponenten des optoelektronische Sensors 10 grundsätzlich auch möglich wäre.

Die Empfangsoptik 32 weist eine asymmetrische Apertur auf, die dadurch gebildet ist, dass die Ausdehnung der optisch wirksamen Fläche der Empfangsoptik 32 bezogen auf eine Hauptachse 52 der Empfangsoptik 32 auf der dem Sendelichtpfad 16 zugewandten Seite der Hauptachse 52 kleiner ist, als auf der dem Sendelichtpfad 16 abgewandten Seite der Hauptachse 52. Durch diese Asymmetrie der Empfangsapertur werden diejenigen Empfangslichtstrahlen ausgeblendet, die unter einem vergleichsweise flachen Winkel auf den Lichtempfänger 34, d.h. einem kleinen Winkel zwischen dem Strahl und der Empfängeroberfläche, treffen würden und durch Übersprechen auf benachbarte Empfangselemente eine Verschlechterung der Signalqualität verursachen könnten. Durch die asymmetrische Apertur der Empfangsoptik werden somit nur diejenigen Empfangslichtstrahlen 38 durchgelassen, die in Fig. 1 als durchgezogene Linien dargestellt sind. Diejenigen Empfangslichtstrahlen 38', die unter einem besonders flachen Winkel auf den Lichtempfänger 34 treffen würden und durch eine gestrichelte Linie repräsentiert sind, werden ausgeblendet.

Gemäß einer Abwandlung kann anstelle der asymmetrisch ausgestalteten Empfangsoptik 22 gemäß Fig. 1 auch eine symmetrische Empfangsoptik eingesetzt werden, welcher eine Blende zugeordnet ist, deren Apertur eine entsprechende Asymmetrie aufweist.

Insgesamt werden durch die verschiedenen Maßnahmen sowohl eine unschärfebedingte Ausdehnung des Sendelichtflecks als auch eine unschärfebedingte Ausdehnung des Empfangslichtflecks, jeweils bezogen auf die Triangulationsrichtung T, im Vergleich zu herkömmlichen vergleichbaren Sensoren über einen größeren Arbeitsabstandsbereich hinweg reduziert. Dadurch erhöht sich die Entfernungssensitivität des Sensors.

### Bezugszeichenliste

- 10: optoelektronischer Sensor
- 12: Überwachungsbereich
- 14: Sendeanordnung
- 16: Sendelichtpfad, Sendeebene
- 18: Lichtquelle
- 20: virtuelle Lichtquelle
- 22: Sendeoptik
- 24: vordere Brennlinie
- 25: hintere Brennlinie
- 26: Umlenkelement
- 30: Empfangsanordnung
- 32: Empfangsoptik
- 34: Lichtempfänger
- 36: Trägerkarte
- 38, 38': Empfangslichtstrahl
- 40: Optikebene
- 42: Empfangsebene
- 44: Strukturelement
- 46: Anzeige- und Bedieneinheit
- 48: Leitung
- 50: Schnittachse
- 52: Hauptachse

- T: Triangulationsrichtung

## Patentansprüche

1. Optoelektronischer Sensor (10) zum Erfassen von Objekten in einem Überwachungsbereich (12) nach dem Triangulationsprinzip,
mit einer Sendeanordnung (14) zum Aussenden von Sendelichtsignalen in den Überwachungsbereich (12) entlang eines Sendelichtpfads (16), wobei die Sendeanordnung (14) zumindest eine Lichtquelle (18) und eine Sendeoptik (22) umfasst, welche zum Fokussieren der von der zumindest einen Lichtquelle (18) erzeugten Sendelichtsignale in einen Sendelichtfleck eingerichtet ist, und
mit einer Empfangsanordnung (30),
- welche eine Empfangsoptik (32), die zum Fokussieren von Empfangslichtsignalen, die von einem im Überwachungsbereich (12) anwesenden Objekt durch Remission auftreffender Sendelichtsignale erzeugt werden, in einen Empfangslichtfleck eingerichtet ist, und
- einen ortsauflösenden Lichtempfänger (34) umfasst, welcher zum Detektieren des Empfangslichtflecks eingerichtet ist, wobei der Auftreffort des Empfangslichtflecks auf dem Lichtempfänger (34) bezogen auf eine Triangulationsrichtung (T) von dem Abstand des Objekts von dem optoelektronischen Sensor (10) abhängt,
wobei der Lichtempfänger (34) dem Überwachungsbereich (12) zugewandt und die zumindest eine Lichtquelle (18) dem Überwachungsbereich (12) abgewandt angeordnet sind, und wobei die Sendeanordnung (14) zumindest ein Umlenkelement (26) umfasst, welches dazu eingerichtet ist, die von der zumindest einen Lichtquelle (18) zunächst in einer von dem Überwachungsbereich (12) weg weisenden Richtung ausgesendeten Sendelichtsignale in Richtung des Überwachungsbereichs (12) umzulenken, wobei die zumindest eine Lichtquelle (18) und der Lichtempfänger (34) auf einer gemeinsamen, plan ausgestalteten Trägerkarte (36) angeordnet sind, **dadurch gekennzeichnet,**
**dass** die Trägerkarte (36) eine dem Überwachungsbereich (12) zugewandte, eine Vorderseite der Trägerkarte (36) bildende, erste Seite und eine dem Überwachungsbereich (12) abgewandte, eine Rückseite der Trägerkarte (36) bildende, zweite Seite aufweist, wobei der Lichtempfänger (34) auf der ersten Seite und die zumindest eine Lichtquelle (18) auf der zweiten Seite angeordnet sind.

2. Optoelektronischer Sensor (10) nach Anspruch 1,
**dadurch gekennzeichnet,**
**dass** eine Lichteintrittsfläche des Lichtempfängers (34) parallel zu der ersten Seite der Trägerkarte (36) verläuft.

3. Optoelektronischer Sensor (10) nach einem der Ansprüche 1 oder 2,
**dadurch gekennzeichnet,**
**dass** eine Hauptabstrahlrichtung der zumindest einen Lichtquelle (18) senkrecht zu der zweiten Seite der Trägerkarte (36) verläuft.

4. Optoelektronischer Sensor (10) nach einem der vorhergehenden Ansprüche,
**dadurch gekennzeichnet,**
**dass** das zumindest eine Umlenkelement (26) im Sendelichtpfad (16) zwischen der zumindest einen Lichtquelle (18) und der Sendeoptik (22) angeordnet ist.

5. Optoelektronischer Sensor (10) nach einem der vorhergehenden Ansprüche,
**dadurch gekennzeichnet,**
**dass** die Empfangsoptik (32) eine Optikebene (40) aufweist, dass ein, in Ausbreitungsrichtung der Sendelichtsignale betrachtet, hinter dem oder den Umlenkelementen (26) verlaufender Teilabschnitt des Sendelichtpfads (16) in einer Sendeebene (16) verläuft und dass eine Lichteintrittsfläche des Lichtempfängers (34) in einer Empfangsebene (42) verläuft, wobei sich die Sendeebene (16), die Optikebene (40) und die Empfangsebene (42) in einer gemeinsamen Schnittgeraden (50) schneiden.

6. Optoelektronischer Sensor (10) nach einem der vorhergehenden Ansprüche,
**dadurch gekennzeichnet,**
**dass** ein, in Ausbreitungsrichtung der Sendelichtsignale betrachtet, hinter dem oder den Umlenkelementen (26) verlaufender Teilabschnitt des Sendelichtpfads (16) in einer Sendeebene (16) verläuft und dass eine Lichteintrittsfläche des Lichtempfängers (34) in einer Empfangsebene (42) verläuft, wobei der zwischen der Sendeebene (16) und der Empfangsebene (42) eingeschlossene Winkel mehr als 90° beträgt.

7. Optoelektronischer Sensor (10) nach einem der vorhergehenden Ansprüche,
**dadurch gekennzeichnet,**
**dass** die Sendeanordnung (14) mehrere Lichtquellen (18) umfasst, welche entlang einer senkrecht zur Triangulationsrichtung (T) verlaufenden Geraden angeordnet sind, oder
**dass** die Sendeanordnung (14) eine einzelne längsausgedehnte Lichtquelle (18) umfasst, deren Haupterstreckungsrichtung senkrecht zur Triangulationsrichtung (T) verläuft.

8. Optoelektronischer Sensor (10) nach Anspruch 7,
**dadurch gekennzeichnet,**
**dass** die Sendeoptik (22) als eine astigmatische Optik ausgebildet ist, welche derart ausgestaltet und angeordnet ist, dass die mehreren Lichtquellen (18) in einem vorgegebenen Arbeitsabstand bezogen auf die Triangulationsrichtung (T) scharf und in einer Querrichtung dazu unscharf abgebildet werden.

9. Optoelektronischer Sensor (10) nach einem der vorhergehenden Ansprüche,
**dadurch gekennzeichnet,**
**dass** die Empfangsoptik (32) eine asymmetrische Apertur aufweist, welche bezogen auf die Hauptachse (52) der Empfangsoptik (32) auf der dem Sendelichtpfad (16) zugewandten Seite der Hauptachse (52) kleiner ist als auf der dem Sendelichtpfad (16) abgewandten Seite der Hauptachse (52).

10. Optoelektronischer Sensor (10) nach Anspruch 9,
**dadurch gekennzeichnet,**
**dass** die asymmetrische Apertur dadurch gebildet ist, dass die Ausdehnung der optisch wirksamen Fläche der Empfangsoptik (32) bezogen auf die Hauptachse (52) der Empfangsoptik (32) auf der dem Sendelichtpfad (16) zugewandten Seite der Hauptachse (52) kleiner ist als auf der dem Sendelichtpfad (16) abgewandten Seite der Hauptachse (52).

11. Optoelektronischer Sensor (10) nach Anspruch 9,
**dadurch gekennzeichnet,**
**dass** die asymmetrische Apertur dadurch gebildet ist, dass der bevorzugt rotationssymmetrisch ausgebildeten Empfangsoptik (32) eine Aperturblende zugeordnet ist, deren Öffnung bezogen auf die Hauptachse (52) der Empfangsoptik (32) auf der dem Sendelichtpfad (16) zugewandten Seite der Hauptachse (52) kleiner ist als auf der dem Sendelichtpfad (16) abgewandten Seite der Hauptachse (52).

## Claims

1. An optoelectronic sensor (10) for detecting objects in a monitored zone (12) in accordance with the triangulation principle,
said optoelectronic sensor (10) comprising a transmission arrangement (14) for transmitting transmission light signals into the monitored zone (12) along a transmission light path (16), wherein the transmission arrangement (14) comprises at least one light source (18) and a transmission optics (22) which is configured to focus the transmission light signals generated by the at least one light source (18) into a transmission light spot, and
a reception arrangement (30)
- which comprises a reception optics (32) which is configured to focus reception light signals, which are generated by an object present in the monitored zone (12) by a remission of incident transmission light signals, into a reception light spot, and
- a spatially resolving light receiver (34) which is configured to detect the reception light spot, wherein the point of incidence of the reception light spot on the light receiver (34) with respect to a triangulation direction (T) depends on the distance of the object from the optoelectronic sensor (10), wherein the light receiver (34) faces the monitored zone (12) and the at least one light source (18) is arranged facing away from the monitored zone (12), and wherein the transmission arrangement (14) comprises at least one deflection element (26) which is configured to deflect the transmission light signals, which are initially transmitted in a direction facing away from the monitored zone (12) by the at least one light source (18), in the direction of the monitored zone (12),
wherein the at least one light source (18) and the light receiver (34) are arranged on a common carrier board (36) of a planar design, **characterized in that**
the carrier board (36) has a first side facing the monitored zone (12) and forming a front side of the carrier board (36) and a second side facing away from the monitored zone (12) and forming a rear side of the carrier board (36), with the light receiver (34) being arranged at the first side and the at least one light source (18) being arranged at the second side.

2. An optoelectronic sensor (10) according to claim 1,
**characterized in that**
a light entry surface of the light receiver (34) extends parallel to the first side of the carrier board (36).

3. An optoelectronic sensor (10) according to one of the claims 1 or 2, **characterized in that**
a main radiation direction of the at least one light source (18) extends perpendicular to the second side of the carrier board (36).

4. An optoelectronic sensor (10) according to any one of the preceding claims, **characterized in that**
the at least one deflection element (26) is arranged in the transmission light path (16) between the at least one light source (18) and the transmission optics (22).

5. An optoelectronic sensor (10) according to any one of the preceding claims, **characterized in that**
the reception optics (32) has an optics plane (40), **in that** a partial section of the transmission light path (16) extending behind the deflection element(s) (26), viewed in the propagation direction of the transmission light signals, extends in a transmission plane (16), and **in that** a light entry surface of the light receiver (34) extends in a reception plane (42), with the transmission plane (16), the optics plane (40) and the reception plane (42) intersecting in a common intersection line (50).

6. An optoelectronic sensor (10) according to any one of the preceding claims, **characterized in that**
a partial section of the transmission light path (16) extending behind the deflection element(s) (26), viewed in the propagation direction of the transmission light signals, extends in a transmission plane (16), and **in that** a light entry surface of the light receiver (34) extends in a reception plane (42), with the angle included between the transmission plane (16) and the reception plane (42) amounting to more than 90°.

7. An optoelectronic sensor (10) according to any one of the preceding claims, **characterized in that**
the transmission arrangement (14) comprises a plurality of light sources (18) which are arranged along a straight line extending perpendicular to the triangulation direction (T), or
**in that** the transmission arrangement (14) comprises a single longitudinally extended light source (18) whose main direction of extent extends perpendicular to the triangulation direction (T).

8. An optoelectronic sensor (10) according to claim 7,
**characterized in that**
the transmission optics (22) is configured as an astigmatic optics which is designed and arranged such that the plurality of light sources (18) are imaged sharply at a predefined working distance with respect to the triangulation direction (T) and out of focus in a transverse direction thereto.

9. An optoelectronic sensor (10) according to any one of the preceding claims, **characterized in that**
the reception optics (32) has an asymmetrical aperture which, with respect to the main axis (52) of the reception optics (32), is smaller at the side of the main axis (52) facing the transmission light path (16) than at the side of the main axis (52) facing away from the transmission light path (16).

10. An optoelectronic sensor (10) according to claim 9,
**characterized in that**
the asymmetrical aperture is formed **in that** the extent of the optically effective area of the reception optics (32) with respect to the main axis (52) of the reception optics (32) is smaller at the side of the main axis (52) facing the transmission light path (16) than at the side of the main axis (52) facing away from the transmission light path (16).

11. An optoelectronic sensor (10) according to claim 9,
**characterized in that**
the asymmetrical aperture is formed **in that** the reception optics (32), which is preferably rotationally symmetrical, is assigned an aperture diaphragm whose opening with respect to the main axis (52) of the reception optics (32) is smaller at the side of the main axis (52) facing the transmission light path (16) than at the side of the main axis (52) facing away from the transmission light path (16).

## Revendications

1. Capteur optoélectronique (10) pour détecter des objets dans une zone à surveiller (12) selon le principe de la triangulation,
comprenant un dispositif d'émission (14) pour émettre des signaux lumineux d'émission dans la zone à surveiller (12) le long d'un chemin lumineux d'émission (16), le dispositif d'émission (14) comprenant au moins une source de lumière (18) et une optique d'émission (22) qui est conçue pour focaliser les signaux lumineux d'émission, générés par ladite au moins une source de lumière (18), en un spot lumineux d'émission, et
comprenant un dispositif de réception (30),
- qui comprend une optique de réception (32) conçue pour focaliser en un spot lumineux de réception les signaux lumineux de réception qui sont générés par un objet, présent dans la zone à surveiller (12), par renvoi de signaux lumineux d'émission incidents, et
- un récepteur de lumière (34) à résolution spatiale conçu pour détecter le spot lumineux de réception, sachant que le lieu d'incidence du spot lumineux de réception sur le récepteur de lumière (34) par rapport à une direction de triangulation (T) dépend de la distance entre l'objet et le capteur optoélectronique (10),
dans lequel
le récepteur de lumière (34) est disposé en étant tourné vers la zone à surveiller (12) et ladite au moins une source de lumière (18) est disposée en étant détournée de la zone à surveiller (12), et le dispositif d'émission (14) comprend au moins un élément de déviation (26) conçu pour dévier les signaux lumineux d'émission, émis par ladite au moins une source de lumière (18) d'abord dans une direction s'éloignant de la zone à surveiller (12), en direction de la zone à surveiller (12),
ladite au moins une source de lumière (18) et le récepteur de lumière (34) sont disposés sur une carte porteuse plane (36) commune,
**caractérisé en ce que**
la carte porteuse (36) présente une première face tournée vers la zone à surveiller (12) et formant une face avant de la carte porteuse (36), et une deuxième face détournée de la zone à surveiller (12) et formant une face arrière de la carte porteuse (36), le récepteur de lumière (34) étant disposé sur la première face et ladite au moins une source de lumière (18) étant disposée sur la deuxième face.

2. Capteur optoélectronique (10) selon la revendication 1,
**caractérisé en ce que**
une surface d'entrée de lumière du récepteur de lumière (34) est parallèle à la première face de la carte porteuse (36).

3. Capteur optoélectronique (10) selon l'une des revendications 1 ou 2, **caractérisé en ce que**
une direction principale d'émission de ladite au moins une source de lumière (18) est perpendiculaire à la deuxième face de la carte porteuse (36).

4. Capteur optoélectronique (10) selon l'une des revendications précédentes, **caractérisé en ce que**
ledit au moins un élément de déviation (26) est disposé dans le chemin lumineux d'émission (16) entre ladite au moins une source de lumière (18) et l'optique d'émission (22).

5. Capteur optoélectronique (10) selon l'une des revendications précédentes, **caractérisé en ce que**
l'optique de réception (32) présente un plan d'optique (40),
**en ce qu'**une portion partielle du chemin lumineux d'émission (16) s'étendant derrière le ou les éléments de déviation (26), vu dans le sens de propagation des signaux lumineux d'émission, s'étend dans un plan d'émission (16), et
**en ce qu'**une surface d'entrée de lumière du récepteur de lumière (34) s'étend dans un plan de réception (42),
le plan d'émission (16), le plan d'optique (40) et le plan de réception (42) se coupant en une droite d'intersection commune (50).

6. Capteur optoélectronique (10) selon l'une des revendications précédentes, **caractérisé en ce que**
une portion partielle du chemin lumineux d'émission (16) s'étendant derrière le ou les éléments de déviation (26), vu dans le sens de propagation des signaux lumineux d'émission, s'étend dans un plan d'émission (16), et
**en ce qu'**une surface d'entrée de lumière du récepteur de lumière (34) s'étend dans un plan de réception (42),
l'angle inclus entre le plan d'émission (16) et le plan de réception (42) étant supérieur à 90°.

7. Capteur optoélectronique (10) selon l'une des revendications précédentes, **caractérisé en ce que**
le dispositif d'émission (14) comprend plusieurs sources de lumière (18) qui sont disposées le long d'une ligne droite perpendiculaire à la direction de triangulation (T), ou
**en ce que** le dispositif d'émission (14) comprend une seule source de lumière (18) étendue longitudinalement, dont la direction d'extension principale est perpendiculaire à la direction de triangulation (T).

8. Capteur optoélectronique (10) selon la revendication 7,
**caractérisé en ce que**
l'optique d'émission (22) est conçue comme une optique astigmatique qui est concue et disposée de telle sorte que lesdites plusieurs sources de lumière (18) sont représentées de manière nette à une distance de travail prédéfinie par rapport à la direction de triangulation (T) et de manière floue dans une direction transversale à celle-ci.

9. Capteur optoélectronique (10) selon l'une des revendications précédentes, **caractérisé en ce que**
l'optique de réception (32) présente une ouverture asymétrique qui, par rapport à l'axe principal (52) de l'optique de réception (32), est plus petite sur le côté de l'axe principal (52) tourné vers le chemin lumineux d'émission (16) que sur le côté de l'axe principal (52) détourné du chemin lumineux d'émission (16).

10. Capteur optoélectronique (10) selon la revendication 9,
**caractérisé en ce que**
l'ouverture asymétrique est formée par le fait que l'extension de la surface optiquement efficace de l'optique de réception (32) par rapport à l'axe principal (52) de l'optique de réception (32) est plus petite sur le côté de l'axe principal (52) tourné vers le chemin lumineux d'émission (16) que sur le côté de l'axe principal (52) détourné du chemin lumineux d'émission (16).

11. Capteur optoélectronique (10) selon la revendication 9,
**caractérisé en ce que**
l'ouverture asymétrique est formée par le fait qu'un diaphragme d'ouverture est associé à l'optique de réception (32), réalisée de préférence à symétrie de révolution, dont le degré d'ouverture, par rapport à l'axe principal (52) de l'optique de réception (32), est plus petit sur le côté de l'axe principal (52) tourné vers le chemin lumineux d'émission (16) que sur le côté de l'axe principal (52) détourné du chemin lumineux d'émission (16).
